# EUROPEAN PATENT APPLICATION

(11) **EP 1 127 801 A1**
(43) Date of publication of application: **29.08.2001**
(21) Application number: 00830132.7
(22) Date of filing: 24.02.2000
(51) Int. Cl.: B65D 47/08, A47J 41/00

(54) **Dispenser with flow-reducing element**

(71) Applicant: PPG INDUSTRIES ITALIA S.r.l., 15028 Quattordio (Alessandria) (IT)
(72) Inventor: Arrigoni, Luciano, PPG Industries Italia S.R.L., 15028 Quattordio (Allessandria) (IT); Rizzotto Rosa, Adriano, PPG Ind. Italia S.R.L., 15028 Quattordio (Allessandria) (IT); Giunta, Andrea, PPG Ind. Italia S.R.L., 15028 Quattordio (Allessandria) (IT)
(74) Representative: Long, Giorgio

(57) **Abstract**

In general, the present invention relates to a dispenser, particularly a dispenser for viscous liquids such as paints.

More particularly, the present invention relates to a dispenser (1) comprising a base (2) which can be fitted on the neck (35) of a bottle (36) containing the liquid to be dispensed, and a lid (3) connected to the base (2) in a manner such that it can be opened, a dispensing chamber (5) defined in the base (2) being in fluid communication with the bottle (36) and, in dispensing conditions, with the exterior, and the dispensing chamber (5) having an upper opening (5'), the device (1) being characterized in that the upper opening (5') houses a reducer element (30) having a dispensing opening (33) with a smaller width than the upper opening (5') of the dispensing chamber (5).

## Description

In general, the present invention relates to a dispenser, particularly a dispenser for viscous liquids such as paints.

There has been considerable progress in the development of painting products, particularly for motor-vehicle bodywork, in recent years. The large range of different colours and shades used in the automotive industry can in practice be produced by mixing a limited number of basic dyes in suitable quantities. This requires considerable diligence and great care on the part of the car-body builder in metering even small quantities of paints. It is in fact advisable, in order to limit costs, to prepare only the quantity of paint of the desired shade which is strictly necessary to perform the painting so as not to waste too much paint upon completion of the work.

It is therefore essential for the dispenser to enable the dyes to be metered accurately, even in quantities of the order of one gram or, in some cases, of one tenth of a gram. This requirement is not satisfied, however, by the dispensers of the prior art.

Moreover, the ever more widespread use of water-based paints tends to make the use of metal cans and dispensers inadvisable because of the risk of corrosion thereof.

The problem upon which the present invention is based is therefore that of providing a dispenser which enables even small quantities of paint to be metered accurately and which is also inexpensive.

This problem is solved by the dispenser defined in the appended claims.

Further characteristics and advantages of the dispenser of the present invention will become clearer from the description of an embodiment given below by way of non-limiting example with reference to the following drawings:
Figure 1 is an exploded perspective view showing the dispenser of the present invention from above,

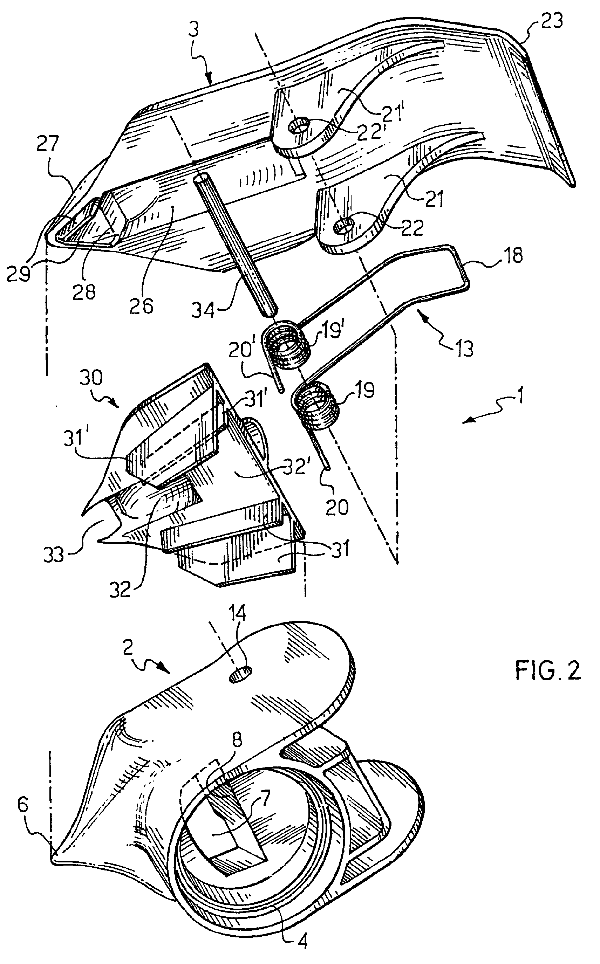

Figure 2 shows the dispenser of Figure 1 from below,
Figure 3 is a sectioned side view of the dispenser of the present invention fitted on a bottle,
Figure 4 shows the dispenser of Figure 3 in the dispensing condition.

With reference to the drawings, the dispenser, generally indicated 1, comprises, basically, a base 2 and a lid 3.

The base 2 comprises a lower opening having a threaded socket 4 for screwing onto the threaded neck of a bottle containing the liquid to be dispensed.

The upper portion of the base 2 has an acute-angled, pointed spout 6 at the front and, internally, comprises a dispensing chamber 5 which is in fluid communication with the lower opening through an orifice 7. The dispensing chamber 5 is defined by a rear wall 8 and by two side walls 9, 9' which converge slightly towards the region where the spout 6 is joined to the base 2. The lower surface 10 of the dispensing chamber 5 is curved with an inflection and links the rim of the orifice 7 to the end of the spout 6. The dispensing chamber 5 also has an upper opening 5'.

Beside the side walls 9, 9' of the dispensing chamber 5 there are two recesses 11, 11' the function of which will become clearer from the following description.

A seat 12 for a spring 13 is located behind the rear wall 8 of the dispensing chamber 5. The seat 12 comprises two side walls having two aligned through-holes 14, 14', and a lower surface on the rear portion of which a raised portion 15 having holes 16, 16', is defined. Two teeth 17, 17' are disposed in front of the holes 16, 16' and in positions closer together.

The spring 13 is a helical flexion spring and has a lever portion 18 connecting two aligned coils 19, 19' to which respective end bars 20, 20' are connected. The two end bars 20, 20' are intended to be fitted in the holes 16, 16' in the seat 12, on the outer sides of and substantially in contact with the teeth 17, 17' which therefore cooperate in keeping the spring in position.

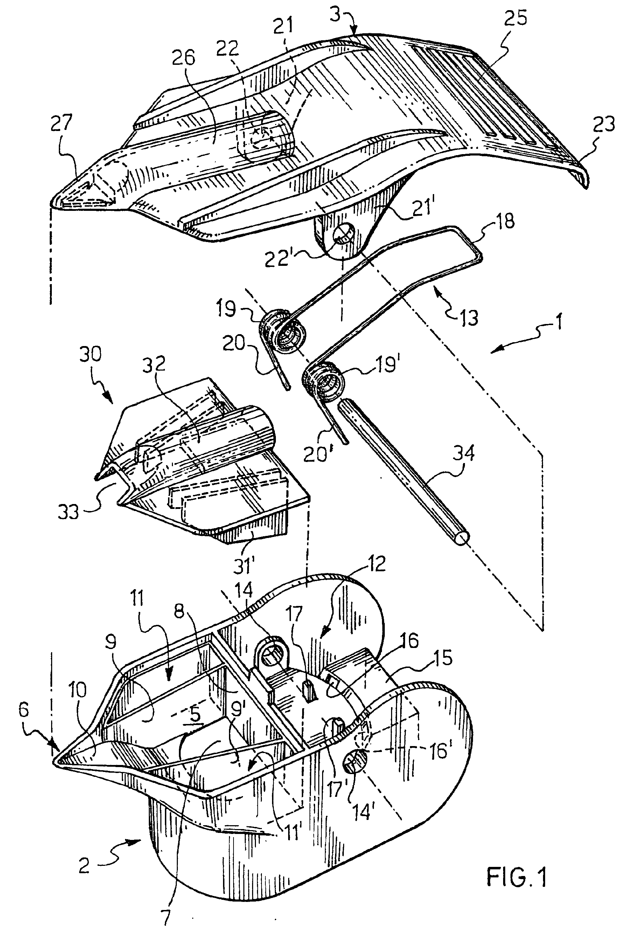

The lid 3 has two lower lateral tabs 21, 21' arranged so as to fit inside the side walls of the seat 12 of the base 2. Through-holes 22, 22' are formed in the tabs 21, 21' and, once the device has been assembled, are aligned both with the holes 14, 14' of the base 2 and with the longitudinal axes of the coils 19, 19' of the spring 13. As will become clearer from the following description, the lid 3 can pivot about the axis extending through the holes 22, 22'. The lid 3 also comprises a lever 23 disposed at the rear, and a front portion 24. As shown in Figure 1, the lever 23 which is preferably of an ergonomic shape has, on its upper surface, transverse corrugations 25 designed so as to facilitate operation by the user, improving gripping thereof by friction.

The front portion 24 of the lid is shaped in the same manner as the corresponding front portion of the base 2 with which it is intended to mate. The surface of the front portion 24 is shaped so as to define, on its lower side, a semicylindrical recess 26 terminating at the front in a cap 27. The cap 27 has a pointed shape so as to mate with and engage the spout 6 of the base 2. The recess 26 and the cap 27 are separated internally by a closure surface 28. Moreover, the lower rim of the cap 27 has a projection 29 which is intended to fit inside the rim of the spout 6 of the base 2, substantially in contact with the internal wall thereof.

The dispenser 1 also comprises a reducer element 30 of a shape such as to cover the upper opening 5' of the dispensing chamber 5 so as to restrict its dispensing orifice. For this purpose, the reducer element 30 has lower tabs 31, 31' which are intended to be housed and fitted inside respective recesses 11, 11', the tabs reacting against the inner walls of the recesses. The surface of the reducer element 30 has a central raised portion 32 of a shape such as to be housed inside the recess 26 in the lid 3 when the latter is in the closure position. This raised portion 32 defines, at the front, a dispensing opening 33 which, when the reducer element 30 is positioned on the upper opening 5' of the dispensing chamber 5, is delimited at the bottom by the lower surface 10, thus constituting the sole orifice for dispensing the liquid. The dispensing opening 33 has a width smaller than that of the upper opening 5' of the chamber 5 and preferably corresponding to the width of the base of the spout 6. Moreover, the cavity formed below the raised portion 32 is partly closed, in its rear portion, by a connecting surface 32'. Once the reducer element 30 has been fitted on the base 2, this connecting surface 32' will be disposed above the orifice 7 of the dispensing chamber 5 but spaced therefrom. The paint will thus be directed towards the dispensing opening 33 whilst, in the rear part of the raised portion 32, the cavity thus created will not be filled with liquid.

During the assembly of the device 1, that is, after the reducer element 30 has been positioned inside the dispensing chamber 5 of the base 2 and after the spring 13 has been placed in its seat 12 as described above, and the lid 3 has been placed on the base 2, a pin 34 is inserted through the holes 14, 14', 21, 21' and through the coils 19, 19', all of these elements being arranged in alignment, so as to assemble the dispenser firmly. The lid 3 can thus pivot about the axis defined by the pin 34. Firm and precise closure of the lid 3 is ensured by the reaction of the spring 13, by means of its lever 18, against the lower surface of the lever 23 of the lid.

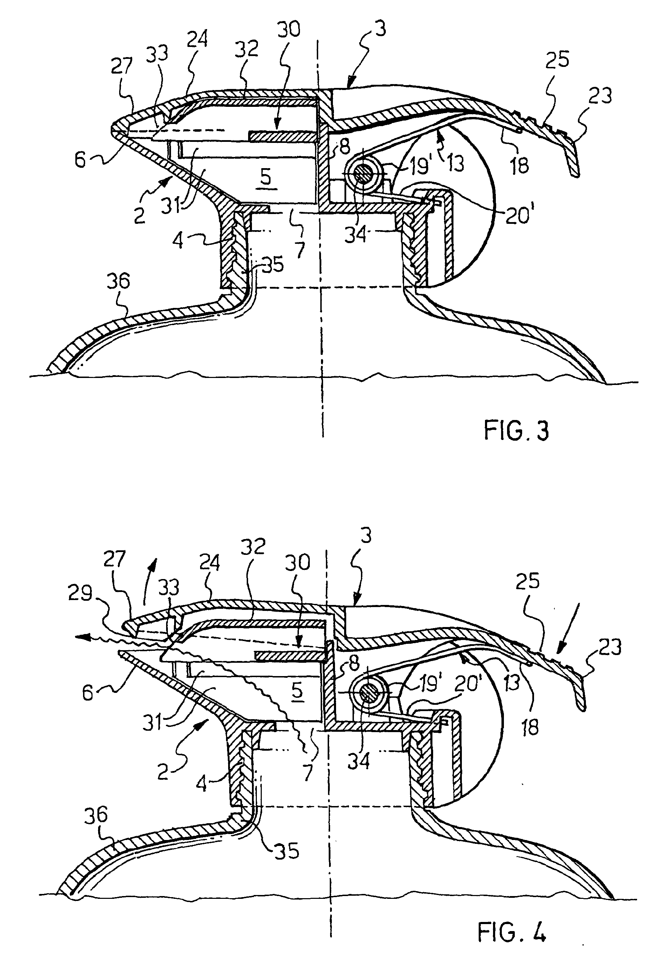

The dispenser of the present invention operates as follows. The dispenser 1 is screwed onto the neck 35 of the bottle 36 containing the liquid to be metered. As shown in Figure 4, if a pressure is exerted on the lever 23 of the lid 3, its front portion 24 is raised, allowing the liquid to be dispensed by the spout 6, through the dispensing opening 33. The opening of the lid 3 is limited since the lateral tabs 21, 21' come into abutment with the rear wall 8 of the dispensing chamber 5. The lid thus opens only by a few degrees (3°-5°). As soon as the pressure is removed from the lever 23, the spring 13 closes the lid rapidly, instantaneously interrupting the flow of liquid dispensed. The fact that the angle of opening of the lid 3 is only a few degrees constitutes an advantage, since the return travel of the lid to the closure position will be very short and will thus be performed very quickly by the spring 13.

The projection 29 on the lower rim of the cap 27 of the lid 3 acts as an anti-drip rim preventing the liquid from dribbling and dripping. In fact, when the lid 3 is closed, the projection 29 abuts the rim of the opening 33 of the reducer element 30 and, at the same time, engages the internal walls of the spout 6, preventing any further leakage of liquid.

The acute-angled shape of the spout 6 enables a thin stream of liquid to be dispensed, facilitating metering.

The presence of the reducer element 30 has the function of limiting both the quantity of liquid dispensed and the quantity of air which is admitted to the bottle 36. Since the rate of the flow dispensed is proportional to the pressure inside the bottle and this pressure will depend on the quantity of air admitted thereto during dispensing (in order to replace the liquid dispensed), it is clear that the device of the invention has the unquestionable advantage of permitting improved dispensing control. Moreover, the limited opening prevents dust or other impurities present in the air from entering the bottle, safeguarding the integrity of its contents.

Further advantages of the dispenser 1 are constituted by the fact that the dispenser can be made of an inexpensive material such as, for example, plastics material. This material is advantageous above all because it is not subject to corrosion by paints in aqueous suspension. The dispenser 1 or portions thereof may, however, be made of metal, according to the required usage.

The ergonomic shape of the lever 23 of the lid 3 facilitates its use. Moreover, the dispenser of the present invention can be fitted on the standard necks 35 of bottles of various sizes by means of the threaded socket 4.

Naturally, the embodiment described is only one particular embodiment of the dispenser of the present invention, to which an expert in the art may apply any modifications necessary to adapt it to specific applications without, however, thereby departing from the scope of protection of the present invention.

For example, the helical flexion spring 13 may be replaced by a spring of another type, for example, by a torsion spring.

The shape and size of the opening 33 and of the spout 6 may also vary, albeit within certain limits, according to the type of liquid to be dispensed.

## Claims

1. A dispenser (1) comprising a base (2) which can be fitted on the neck (35) of a bottle (36) containing the liquid to be dispensed, and a lid (3) connected to the base (2) in a manner such that it can be opened, a dispensing chamber (5) defined in the base (2) being in fluid communication with the bottle (36) and, in dispensing conditions, with the exterior, and the dispensing chamber (5) having an upper opening (5'), the device (1) being characterized in that the upper opening (5') houses a reducer element (30) having a dispensing opening (33) with a smaller width than the upper opening (5') of the dispensing chamber (5).

2. A dispenser (1) according to Claim 1, in which the base (2) has an acute-angled spout (6) for dispensing the liquid.

3. A dispenser (1) according to Claim 2, in which the dispensing opening (33) has a width substantially corresponding to the width of the base of the spout (6).

4. A device (1) according to any one of Claims 1 to 3, in which the lid (3) has, at the front, a cap (27) of a shape and size such as to engage the rim of the spout (6) of the base (2).

5. A dispenser (1) according to Claim 4, in which an anti-drip projection (29) is disposed on the lower rim of the cap (27).

6. A dispenser (1) according to Claim 5, in which the anti-drip projection (29) is arranged in a manner such as to fit inside the rim of the spout (6), substantially in contact with the internal wall thereof, when the lid (3) is in the closure position.

7. A dispenser (1) according to any one of Claims 1 to 6, in which the lid (3) has two lower lateral tabs (21, 21') having aligned through-holes (22, 22'), the lid (3) having a front portion (24) on which the cap (27) is disposed, and a lever (23) disposed at the rear, the lid (3) pivoting about the axis extending through the holes (22, 22').

8. A dispenser (1) according to Claim 7, in which the lever (23) has an ergonomic shape.

9. A dispenser (1) according to Claim 7 or Claim 8, in which transverse corrugations (25) are arranged on the upper surface of the lever (23).

10. A dispenser (1) according to any one of Claims 7 to 9, in which the dispensing chamber (5) of the base (2) has a rear wall (8) behind which there is a seat (12) for a spring (13), the spring (13) being arranged in a manner such as to react against the lower surface of the lever (23) of the lid (3).

11. A dispenser (1) according to Claim 10, in which the spring (13) is a helical flexion spring.

12. A dispenser (1) according to any one of Claims 7 to 11, in which the lid (3) can be opened through an angle of 3°-5°.
